# EUROPÄISCHE PATENTSCHRIFT

(11) **EP 3 050 194 B1**
(45) Veröffentlichungstag und Bekanntmachung des Hinweises auf die Patenterteilung: **30.10.2019**
(21) Anmeldenummer: 14776606.7
(22) Anmeldetag: 19.09.2014
(51) Int. Cl.: H02K 7/00, B60K 6/26, F16D 3/02, F16F 15/12

(54) **BAUEINHEIT MIT EINER ELEKTRISCHEN MASCHINE**
ASSEMBLY WITH AN ELECTRIC MACHINE
MODULE ÉQUIPÉ D'UNE MACHINE ÉLECTRIQUE

(30) Priorität: 25.09.2013 DE 102013219247
(43) Veröffentlichungstag der Anmeldung: 03.08.2016
(73) Patentinhaber: ZF Friedrichshafen AG, 88046 Friedrichshafen (DE)
(72) Erfinder: GROSSPIETSCH, Wolfgang, 97422 Schweinfurt (DE); VIERNEKES, Gerald, 97437 Hassfurt (DE); MARKOW, Alexander, 97421 Schweinfurt (DE)
(86) Internationale Anmeldenummer: PCT/EP2014/069987
(87) Internationale Veröffentlichungsnummer: WO 2015/044045

(56) Entgegenhaltungen:
- EP-A1- 1 582 765
- EP-A1- 2 273 143
- EP-A2- 1 920 964
- DE-A1- 19 914 376
- DE-A1- 19 943 037
- DE-A1-102012 200 966
- DE-C1- 4 404 791
- US-A- 5 219 314

## Beschreibung

Die Erfindung betrifft eine Baueinheit gemäß dem Oberbegriff des Patentanspruchs 1.

Eine solche Baueinheit ist bereits in der DE10 2006 053 660 A1 offenbart. Dort ist eine Baueinheit mit elektrischer Maschine, Torsionsdämpfer und Verbrennungsmotor, der über eine Kupplungsscheibe lösbar mit dem Rotor der elektrischen Maschine wirkverbunden ist, ausgeführt. Aufgrund von Toleranzen bei Fertigung und Montage, sowie Taumelbewegungen der Kurbelwelle, treten Achsversätze und auch Winkelversätze zwischen den Rotationsachsen der verschiedenen Module des Antriebsstrangs auf, beispielsweise einer Kurbelwelle des Verbrennungsmotors, einer Rotationsachse des Rotors der elektrischen Maschine, einer Getriebeeingangswelle eines Schaltgetriebes, usw. Diese Versätze zwischen den einzelnen Wellen der Module werden dort durch eine Achsversatzvorrichtung, insbesondere durch eine taumelweiche Lagerung des Rotors gegenüber dem Stator ausgeglichen, wobei mehrere verschiedene Lagervarianten zur Anordnung des Rotors an dem Stator beschrieben sind. Diese taumelweiche Lagerung ist bei heutigen Achsversätzen von 1 mm oder mehr, sehr hohen Belastungen ausgesetzt. Dies wirkt sich unter anderem negativ auf die elektrische Maschine aus.

Es ist zu beachten, dass die Achsversätze nicht ausgeglichen oder eliminiert werden, sondern dass lediglich ein Drehmomentübertrag zwischen zwei drehbaren Bauteilen, deren Rotationsachsen einen Achsversatz zueinander aufweisen, ermöglicht wird.

Eine weitere Möglichkeit eine Drehmomentübertragung bei einem Achsversatz zu realisieren ist in der DE 100 02 830 B4 anhand einer eigenständigen Kupplungsscheibe gezeigt, welche jedoch keine Baueinheit gemäß der Eingangs erläuterten Gattung darstellt. Dort ist eine Mitnehmerscheibe mit einer Nabenscheibe über eine Verzahnung mit zwischengeschalteten Schraubenfedern wirkverbunden, wodurch eine Achsversatzvorrichtung gebildet wird. Die Verzahnung bietet ausreichend Spiel in Radial- und Umfangsrichtung, damit die Mitnehmerscheibe und die Nabenscheibe in gewissem Maß verschiedene Rotationsachsen aufweisen können und über die Schraubenfedern dennoch drehmomentübertragend verbunden sind.

Bei Hybrid- und Elektrofahrzeuge werden elektrische Maschinen als Antriebsmotor verwendet oder innerhalb des Antriebsstrangs zur Unterstützung eines Hauptantriebs integriert. Durch die Kasten- bzw. Modulbauweise werden daher im Antriebsstrang meist mehre Module aneinandergereiht. Um Achsversätze zwischen den Modulen zu vermeiden sind hohe Anforderungen an Fertigungs- und Montagetoleranzen zu stellen. Diese Achsversätze lassen sich mit hohem Aufwand eliminieren, beispielsweise durch hochpräzise Fertigung, sowie entsprechende Zentrier- und Lagervorrichtungen, welche die Module zueinander ausrichten, beispielsweise Pilotlager. Dies benötigt entsprechend zusätzlichen Bauraum.

Eine gattungsgemäße Baueinheit ist in der DE 199 43 037 A1 beschrieben. Diese zeigt eine elektrische Maschine, deren Rotor über Blattfedern mit einem Torsionsdämpfer verbunden ist. Die Blattfedern sind dabei rotorseitig sowie Torsionsdämpferseitig befestigt.

Es ist daher Aufgabe eine Baueinheit mit einer alternativen Achsversatzvorrichtung bereitzustellen.

Diese vorstehende Aufgabe wird mittels der Baueinheit gemäß dem unabhängigen Patentanspruch gelöst. In den abhängigen Ansprüchen sind vorteilhafte Ausgestaltungen und Weiterbildungen der Erfindung angegeben.

Gemäß der Erfindung wird eine Baueinheit vorgeschlagen, umfassend eine elektrischen Maschine mit einem Stator und einem drehbaren Rotor,ein drehbares Ausgangselement, welches zur Übertragung eines Drehmoments mit dem Rotor in Wirkverbindung steht, und eine Achsversatzvorrichtung, wobei die Achsversatzvorrichtung zwischen dem Rotor und dem Ausgangselement angeordnet ist und die Übertragung eines Drehmoments bei einem Achsversatz und/oder einem Winkelversatz zwischen einer Rotationsachse des Rotors und einer Rotationsachse des Ausgangselements ermöglicht.

Dabei weist die Achsversatzvorrichtung ein Antriebselement, ein Abtriebselement und zumindest ein elastisches Element auf, wobei das elastische Element funktional zwischen dem Antriebselement und dem Abtriebselement angeordnet ist. Der Rotor der elektrischen Maschine ist hier drehfest oder fest mit dem Antriebselement verbunden, wobei der Rotor die Rotationsachse für das Antriebselement vorgibt. Die Rotationsachse des Abtriebselements hingegen ist durch die Rotationsachse des Ausgangselements vorgegeben, wobei Antriebselement und Ausgangselement über eine feste oder drehfeste Verbindung miteinander verbunden sind. Um eine Drehmomentübertragung zwischen Antriebs- und Abtriebselement zu realisieren, sind diese durch ein oder mehrere elastische/s Element/e miteinander wirkverbunden. Im Folgenden werden Erläuterungen nur noch an einem elastischen Element ausgeführt, wobei diese auf alle elastischen Elemente angewendet werden können.

Zudem weisen das Antriebselement und das Abtriebselement Aussparungen auf, die jeweils paarweise eine Aufnahme bilden, wobei das elastische Element innerhalb einer Aufnahme angeordnet ist. Eine derartige Aufnahme kann so gestaltet sein, dass sich das elastische Element mit seinen in Umfangsrichtung liegenden Enden an dem Antriebselement und dem Abtriebselement abstützt und eine Wirkverbindung erzeugt.

Es ist der Fall, dass immer mehr Baugruppen, beispielsweise Torsionsdämpfer, Aktuatorik oder Kupplungen, innerhalb derartiger Module angeordnet werden. Aufgrund des dadurch entstehenden Platzmangels ist es von Vorteil, wenn sich einzelne Baugruppen, an verschiedenen Positionen eines Moduls integrieren lassen. Hier ist eine Möglichkeit erläutert, eine drehmomentübertragende Achsversatzvorrichtung in einer Baueinheit zwischen der elektrischen Maschine und dem Ausgangselement zu integrieren.
Des Weiteren ist eine derartige drehmomentübertragende Achsversatzvorrichtung im Gegensatz zu der taumelweichen Lagerung des Rotors an dem Stator aus der DE10 2006 053 660 A1 als eigene Baugruppe im Kraft- bzw. Drehmomentfluss der Baueinheit integriert. Dadurch ist die Belastung der Lagerung zwischen dem Rotor und dem Stator der elektrischen Maschine wesentlich verringert.

Zusätzlich dazu verringert eine derartige drehmomentübertragende Achsversatzvorrichtung die Ansprüche an Montage- und Fertigungstoleranzen erheblich und kann bei geringem Fertigungsaufwand verhältnismäßig kostengünstig und bauraumsparend integriert werden.

Eine solche Baueinheit stellt eine Wirkverbindung zwischen zwei drehbaren Bauteilen her, insbesondere eine Drehmomentübertragung zwischen dem Rotor und dem Ausgangselement, wobei die Rotationsachse des Rotors zu der Rotationsachse des Ausgangselements einen Axialversatz (in axialer Richtung) und / oder einen Radialversatz und / oder eine Verkippung zueinander aufweist oder aufweisen kann. Die Rotationsachse des Ausgangselements ist dabei durch eine Welle eines anderen Moduls vorgegeben, wobei das Ausgangselement drehfest mit dieser Welle wirkverbunden ist, beispielsweise einer Getriebeeingangswelle eines Schaltgetriebes. Diese Versätze verändern sich während des Betriebs kontinuierlich, unter anderem aufgrund von Taumelbewegungen der verschiedenen Bauteile. Da auch axiale Versätze auftreten, weist die Achsversatzvorrichtung einen axialen Freiheitsgrad auf. Das Ausgangselement ist daher gegenüber dem Rotor axial verlagerbar.

Solche Axial-, Radial- und Kippversätze werden unter anderem auch von einem Antriebsmotor angeregt, beispielsweise einem Verbrennungsmotor, dessen Kurbelwelle sich durch ungleichmäßige, zeitpunktartige Krafteinleitung verbiegt und dadurch zu einer Taumelbewegung angeregt wird. Diese Taumelbewegung überträgt sich anschließend auf andere Module des Antriebsstrangs.

Die Achsversatzvorrichtung ist gerade bei langen Modulketten von Vorteil, da Fertigungstoleranzen in Kombination mit den Abständen der Montagepunkte der einzelnen Module es erschweren alle Rotationsachsen der einzelnen Module präzise zueinander auszurichten. Je mehr Module verwendet werden, desto größer und problematischer werden auch die Achsversätze.

Grundsätzlich kann das funktionale Antriebselement durch den Rotor bzw. einen Rotorträger des Rotors und / oder das funktionale Abtriebselement durch das Ausgangselement ausgebildet sein. Durch die Integration des funktionalen Antriebselements und Abtriebselements in andere Bauteile kann die Achsversatzvorrichtung sehr kompakt ausgebildet werden.

Außerdem ist es günstig, wenn das Antriebselement mit dem Rotor in einem radial äußeren Bereich verbunden ist. Ist das Antriebselement durch den Rotorträger ausgebildet, so ist dieser vorzugsweise in einem radial äußeren Bereich angeordnet. Dies ist günstig und notwendig um in dem radial inneren Bereich der Baugruppe möglichst viel Bauraum für andere Baugruppen bereitzustellen.

Des Weiteren ist es von Vorteil, wenn das Antriebselement, das Abtriebselement und das elastische Element radial zueinander angeordnet sind. Dies ermöglicht eine platzsparende Bauweise in axialer Richtung.

Es wird vorgeschlagen, dass zwischen dem Antriebselement und dem Abtriebselement Spielzwischenräume in Radialrichtung und in Axialrichtung vorhanden sind, die ein einen Radialversatz, einen Axialversatz, sowie ein Verkippen des Antriebselements und des Abtriebselements zueinander ermöglichen. Im normalen Betriebszustand können das Antriebselement und das Abtriebselement einen Axialversatz, einen Radialversatz und / oder eine Verkippung zueinander aufweisen, ohne dass diese sich gegenseitig berühren bzw. ein Kontakt geraten. Es kann jedoch von Vorteil und auch Notwendig sein, dass sich ein oder mehrere Bauteile der Achsversatzvorrichtung in gewissen Betriebszuständen berühren oder als Anschlag dienen.

Einerseits ist das elastische Element vorzugsweise steif in Umfangsrichtung ausgebildet, damit ein Drehmoment zwischen Antriebselement und Abtriebselement mit möglichst geringem Verlust und möglichst ohne Relativschwingung bzw. Drehschwingung übertragen wird. Andererseits ist das elastische Element in Umfangsrichtung oder Wirkrichtung mit einer großen Federrate, bzw. geringer Kompressibilität auszubilden. In Querrichtung zur Umfangsrichtung oder Wirkrichtung gesehen ist das elastische Element vorzugsweise flexibel ausgeführt, damit Relativbewegungen zwischen dem Antriebselement und dem Abtriebselement in Querrichtung zueinander möglichst kraftfrei ausgeführt werden. Dies kann beispielsweise durch ein elastisches Element, insbesondere eine Schraubenfeder, erreicht werden, dessen Länge im Vergleich mit dem Durchmesser bzw. der Breite des elastischen Elements groß ist. Die Länge des elastischen Elements ist vorteilhafterweise mindestens doppelt so groß, wie der Durchmesser bzw. die Breite des elastischen Elements. Des Weiteren besteht die Möglichkeit die Federkonstante und oder Biegemomente des elastischen Elements so zu wählen, dass dieses steif in Umfangsrichtung oder Wirkrichtung und flexibel in Querrichtung ist.
Das elastische Element und die zugehörige Aufnahme sind derart ausgebildet, dass das elastische Element bei maximal auftretendem Axial-, Radial- und Kippversatz weder plastisch verformt, noch beschädigt oder die Funktionsweise in sonstiger Weise negativ beeinflusst wird.

Eine Ausführungsvariante wird in der Figurenbeschreibung gegeben, wobei im Rahmen dieser Erfindung auch andere Achsversatzvorrichtungen nutzbar sind.

Wie bereits erwähnt, ist es überaus günstig, wenn das Antriebselement drehfest oder fest mit dem Rotor und das Abtriebselement drehfest oder fest mit dem Ausgangselement verbunden ist.

Es ist gemäß einer bevorzugten Ausgestaltung äußerst zweckmäßig, wenn der Rotor zu dem Ausgangselement oder das Antriebselement zu dem Abtriebselement begrenzt drehbar ist. Da die Relativdrehungen und Drehschwingungen zwischen Antriebselement und Abtriebselement klein zu halten sind, ist es vorteilhaft, wenn das elastische Element eine große Federkraft bzw. eine große Federkonstante aufweist. Mit dieser großen Federkraft ist ein relativer Drehwinkel zwischen Rotor und Ausgangselement oder Antriebselement und Abtriebselement klein und der Drehmomentübertrag sehr direkt. Vorzugsweise ist das elastische Element derart ausgebildet, dass der Drehwinkel zwischen Ausgangselement und Eingangselement oder zwischen Antriebselement und Abtriebselement im Wesentlichen einen Drehwinkel von 5° nicht überschreitet.

In einer Weiterbildung ist der Drehwinkel zwischen Ausgangselement und Rotor oder zwischen Antriebselement und Abtriebselement durch einen Anschlag begrenzt. Der Anschlag verhindert unter anderem eine Überlastung oder Beschädigung des elastischen Elements durch einen zu hohen Verdrehwinkel. Bei Verwendung von einer Schraubenfeder als elastisches Element könnte diese beispielsweise auf Block gehen und dadurch beschädigt werden. Des Weiteren begrenzt der Anschlag den Drehwinkel, da eine Relativdrehung und Drehschwingungen so weit wie möglich vermieden werden sollen.

In einer Weiterbildung hat es sich als besonders zweckmäßig herausgestellt, wenn die Achsversatzvorrichtung mindestens drei elastische Elemente aufweist. Günstigerweise sind diese elastischen Elemente, unabhängig von deren Anzahl, gleichmäßig in Umfangsrichtung anzuordnen.

Es hat sich außerdem als günstig erwiesen, wenn das elastische Element als Schraubenfeder ausgeführt ist.

Es wird vorgeschlagen, dass zumindest das/die elastische/n Element/e, sowie Kontaktbereiche des Antriebselements und des Abtriebselements, an denen ein elastisches Element anliegt oder zur Anlage kommen kann, als Stahlwerkstoffteile ausgebildet sind. Alternativ können alle Bauteile der Achsversatzvorrichtung als Stahlwerkstoffteile ausgebildet sein.

In einer Weiterbildung ist/sind zumindest das/die elastische/n Element/e, sowie Kontaktbereiche des Antriebselements und des Abtriebselements, an denen ein elastisches Element anliegt oder zur Anlage kommen kann/können, gehärtet. Durch das Härten wird beispielsweise ein Einarbeiten eines elastischen Elements, insbesondere einer Schraubenfeder, in das Material gehemmt, wobei Schraubenfedern im Normalfall ebenfalls gehärtet sind. Ein Härten ist besonders an Anlagebereichen der elastischen Elemente von Vorteil. Es kann allerdings durchaus von Vorteil sein, weitere Bauteile und / oder das komplette Antriebselement und Abtriebselement gehärtet auszubilden.

Günstigerweise ist die Baueinheit an einem Antriebsmotor mit Kurbelwelle angeordnet, wobei der Rotor mit der Kurbelwelle wirkverbunden ist. Zwischen Kurbelwelle und dem Rotor können weitere Bauteil, wie beispielsweise eine Zwischenwelle, angeordnet sein. Die elektrische Maschine kann in Verbindung mit dem Antriebsmotor, beispielsweise einem Verbrennungsmotor, als Unterstützungsmotor, als Stromerzeuger bzw. Lichtmaschine oder als Anlasser dienen.

Es hat sich weiter als Vorteil herausgestellt, wenn die Baueinheit eine Kupplungsvorrichtung zur wahlweisen Unterbrechung der Drehmomentübertragung zwischen der Kurbelwelle und dem Rotor aufweist. Bei einer derartigen Ausführung besteht die Möglichkeit, dass die elektrische Maschine zusätzlich zu den bereits genannten Funktionen als eigenständiger Antriebsmotor dienen kann.

Es wird vorgeschlagen, dass zumindest die Baueinheit mit der elektrischen Maschine, der Achsversatzvorrichtung und dem Ausgangselement innerhalb als vorgefertigtes Einbaumodul ausgebildet ist. Weitere Komponenten, wie Kupplungsvorrichtung und Zwischenwelle können nach Bedarf ebenfalls in das Einbaumodul integriert werden. Dies hat den Vorteil, dass die Baueinheit als eine Moduleinheit vorgefertigt werden kann. Dies ermöglicht eine einfache Montage eines einzigen Einbaumoduls bei dem Einbau der Baueinheit.

Die Erfindung wird im Folgenden anhand der beigefügten Figuren beispielhaft erläutert.

Es zeigen:
- Fig. 1: einen schematischen Aufbau einer Baueinheit mit einer elektrischen Maschine;
- Fig. 2: eine Ausführungsvariante der Baueinheit aus Fig. 1;
- Fig. 3: eine Ansicht eines Ausschnitts aus einer Achsversatzvorrichtung der Baueinheit mit elektrischer Maschine.

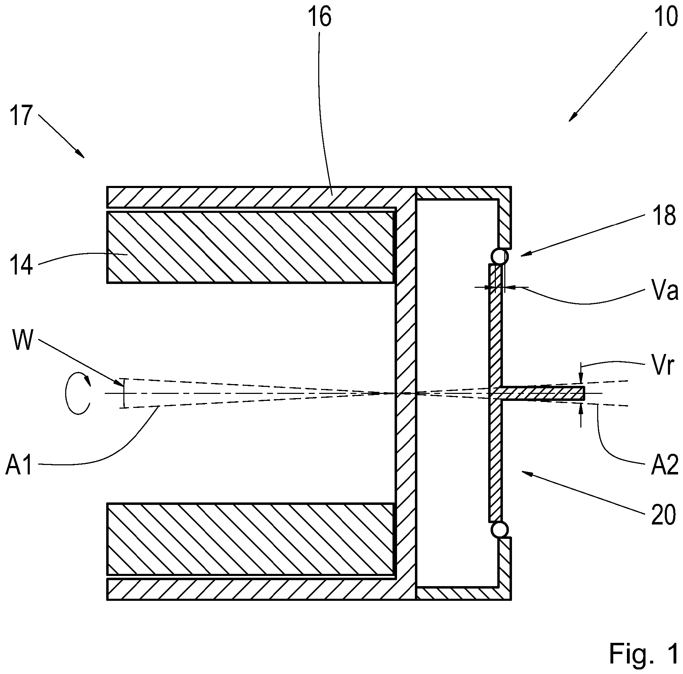

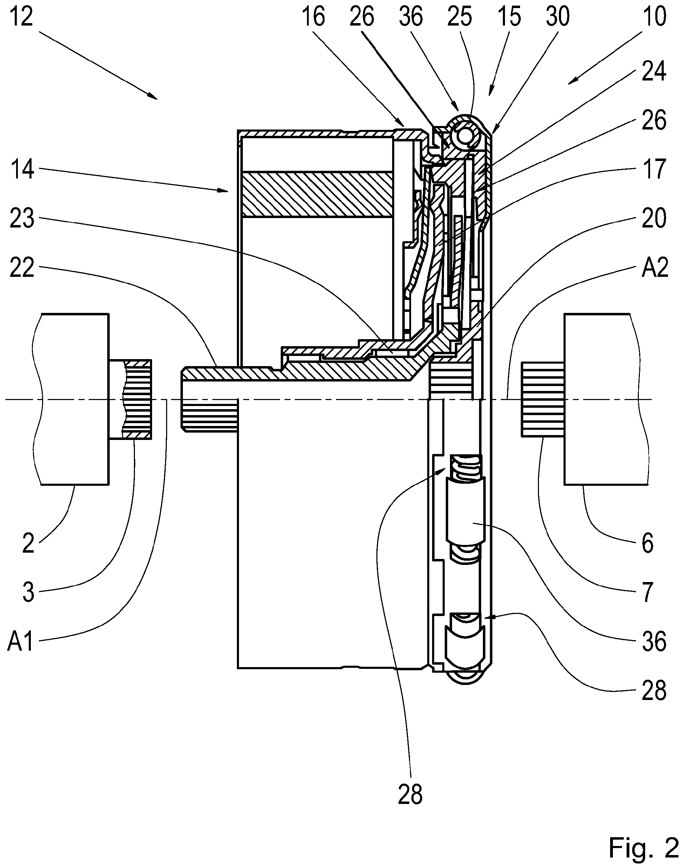

In Fig. 1 ist ein schematischer Aufbau einer Baueinheit 10 mit einer elektrischen Maschine 12 dargestellt. Die elektrische Maschine 12 umfasst einen fest stehenden Stator 14 und einen Rotor 16. Der Rotor 16 ist frei drehbar um die Rotationsachse A1 radial außerhalb des Stators 14 und frei drehbar zu dem Stator 14 angeordnet (Außenläuferbauart). In einer anderen hier nicht dargestellten Variante kann der Rotor 16 auch in einer anderen Weise zum Stator 16 angeordnet sein, beispielsweise innerhalb oder axial seitlich von diesem. Der Rotor 16 ist weiter über eine Achsversatzvorrichtung 18 mit einem Ausgangselement 20 wirkverbunden. Ein möglicher Aufbau und die Funktionsweise der Achsversatzvorrichtung 18 wird erst weiter unten anhand der Fig. 2 erläutert. Das Ausgangselement 20 ist dabei frei drehbar um eine Rotationsachse A2 angeordnet, die zu der Rotationsachse A1 des Rotors 16 verschieden bzw. nicht koaxial ist. Die Rotationsachse A1 des Rotors 16 und die Rotationsachse A2 des Ausgangselements 20 können dabei einen Winkel W (Verkippung) und / oder einen Radialversatz Vr zueinander aufweisen, die sich unter anderem während des Betriebs der Baueinheit 10 innerhalb bestimmter Grenzen ändern können. Des Weiteren kann das Ausgangselement 20 gegenüber dem Rotor 16 einen Axialversatz Va aufweisen, der sich ebenfalls während des Betriebs der Baueinheit 10 innerhalb bestimmter Grenzen ändern kann.

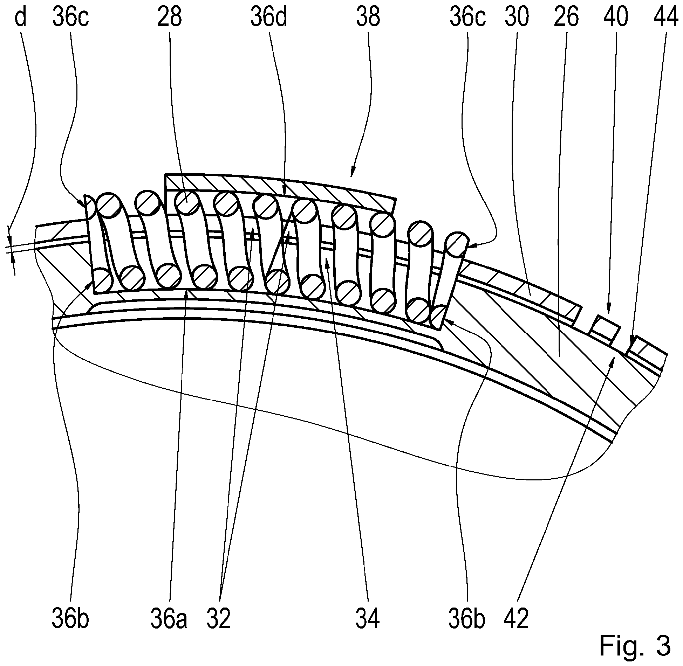

In Fig. 2 und Fig. 3 ist eine Ausführungsvariante, der zuvor schematisch erläuterten Baueinheit 10, dargestellt. Diese Ausführungsvariante weist gegenüber der schematisch erläuterten Baueinheit 10 einige zusätzliche Bauteile auf, die jedoch nicht zwingend notwendig sind.

Die Baueinheit 10 weist einen Stator 14 und einen Rotor 16, der den Stator radial außen umgibt (Außenläuferbauart), auf. Der Stator 14 und der Rotor 16 sind Teil einer elektrischen Maschine 12, die unter anderem auch in Innenläuferbauart oder in einer anderen Variante ausgeführt sein kann.

Der topfförmige Rotor 16 ist über eine Lagerung 23 an einer Eingangswelle 22 gelagert, wobei der Rotor 16 und die Eingangswelle 22 eine gemeinsame Rotationsachse A1 aufweisen. Die Eingangswelle 22 ist hier insbesondere als Hohlwelle ausgeführt. Die Eingangswelle 22 ist außerdem über eine Kupplungsvorrichtung 24 mit dem Rotor 16 drehmomentübertragend lösbar wirkverbunden. Bei der Kupplungsvorrichtung 24 kann es sich um eine übliche, im Antriebsstrang verwendete Kupplung 24 handeln, insbesondere eine trockene oder nasse Reibkupplung 24. Bezüglich der Ausbildung der Kupplungsvorrichtung 24 wird auf die Anmeldung mit der Anmeldenummer 102012216601.7 verwiesen. Die Eingangswelle 22 ist drehfest mit einer Ausgangswelle 3 eines vorgeschalteten Antriebsmotors 2, insbesondere mit der Kurbelwelle 3 eines Verbrennungsmotors 2, wirkverbunden. Der Antriebsmotor 2 mit Ausgangswelle 3, sowie die Kupplungsvorrichtung 24 und die Eingangswelle 22 sind hier optional, wobei ein zusätzlicher Antriebsmotor 2 die Flexibilität und Einsetzbarkeit der Baueinheit 10 wesentlich erhöht. Bei einem derart zuschaltbaren Antriebsmotor 2 kann die elektrische Maschine 12 verschiedene Aufgaben erfüllen, die bereits in der vorherigen Beschreibung erläutert sind.

Der Rotor 16 ist wie in dem schematischen Ausführungsbeispiel aus Fig. 1 über eine Achsversatzvorrichtung 18 mit einem Ausgangselement 20 wirkverbunden. Der Rotor 16 bildet außerdem einen Rotorträger 17 aus. Diese Achsversatzvorrichtung 18 weist mehrere elastische Elemente 28, ein Antriebselement 26 und ein Abtriebselement 30 auf. Die Achsversatzvorrichtung ist hier axial seitlich der elektrischen Maschine 12, auf der dem Antriebsmotor 2 wegweisenden Seite angeordnet. Des Weiteren ist das Antriebselement 26 von dem Abtriebselement 30, welches blechteilförmig ausgeführt ist, radial umschlossen und auf der Seite, die von der elektrischen Maschine 12 wegweist, von dem Abtriebselement 30 abgedeckt. Das Antriebselement 26 ist außerdem fest mit dem Rotor 16 und das Abtriebselement 30 fest mit dem Ausgangselement 20 verbunden, wobei das Ausgangselement 20 radial innerhalb der Achsversatzvorrichtung 18 angeordnet ist. Nachfolgend des Ausgangselements 20 kann beispielsweise ein Schaltgetriebe 6 angeordnet sein, dessen Getriebeeingangswelle 7 mit dem Ausgangselement 20 wirkverbunden ist. Es ist zu erkennen, dass das Antriebselement 26 unter anderem auch als Anpressplatte für die Kupplungsvorrichtung 24 dient.

Um zwischen dem Antriebselement 26 und dem Abtriebselement 30 eine Wirkverbindung zu ermöglichen, weisen das Antriebselement 26 und das Abtriebselement 30 jeweils mehrere Aussparungen 32 auf, die in Umfangsrichtung gleichmäßig verteilt sind und jeweils paarweise Aufnahmen 34 für elastische Elemente 28 bilden. Die elastischen Elemente 28 sind an dem Antriebselement 26, welches hier als Vollteil ausgeführt ist, innerhalb von Nuten 32 angeordnet, die für die elastischen Elemente 28 Anlagebereiche 36a, in radialer Richtung nach innen, sowie zwei Anlagebereiche bzw. Anlageflächen 36b in Umfangsrichtung bilden. An dem blechförmig ausgeführten Abtriebselement 30 durchgreifen die in Umfangsrichtung liegenden elastischen Elemente 28 das Abtriebselement 30 in radialer Richtung innerhalb von Stanzbereichen 32. Diese Stanzbereiche 32 sind derart geformt, dass die elastischen Elemente durch Anlagebereiche 36c in Umfangsrichtung begrenzt sind, sowie durch Anlagebereiche 36d an Führungen 38, bzw. Federführungen 38 nach radial außen begrenzt frei beweglich sind. Die Federführungen 38 dienen unter anderem der Sicherung der elastischen Elemente 28 gegenüber Fliehkräften. Die Federführungen 38 sind in Umfangsrichtung nur über einen Teil der Länge der elastischen Elemente 28 ausgeführt, um den Enden der elastischen Elemente 28 eine erhöhte freie Beweglichkeit in radialer Richtung zu gewährleisten. Diese freie Beweglichkeit der Enden ist notwendig, um dem Antriebselement 26 eine Verkippung W und einen Radialversatz Vr gegenüber dem Abtriebselement 28 zu ermöglichen. Um die Kraftwirkung der elastischen Elemente 28 in radialer Richtung bei Radialversatz Vr möglichst gering zu halten, ist das elastische Element 28 lang, mit geringem Durchmesser ausgeführt. Dies führt beispielsweise bei Schraubenfedern bei großer Federkonstante zu einer hohen Steifigkeit bzw. geringen Komprimierbarkeit in Wirkrichtung bzw. Umfangsrichtung, verglichen zu einer geringen Steifigkeit bzw. hohen Flexibilität in Querrichtung. Grundsätzlich ist es von Vorteil die Federsteifigkeit in Wirkrichtung groß im Vergleich zu der Federsteifigkeit in Querrichtung zu wählen. Passend dazu ist die Flexibilität in Querrichtung bzw. Wirkrichtung relativ zu der Flexibilität in Umfangs- bzw. Wirkrichtung groß zu wählen. Das elastische Element 28 ermöglicht daher einen sehr direkten Drehmomentübertrag zwischen Antriebselement 26 und Abtriebselement 30, wobei eine möglichst kraftfreie Beweglichkeit bei Achsversatz, Radialversatz und Verkippung gegeben ist.

Erfährt das Antriebselement 26 ein Drehmoment, so wird eine Kraft über den Anlagebereich 36b auf das elastische Element 28 übertragen, welches auf den gegenüberliegenden Anlagebereich 36c des Abtriebselements 30 wirkt und das Drehmoment überträgt. Eine Drehmomentübertragung ist in beide Richtungen möglich.

Das Antriebselement 26, das Abtriebselement 30 und die elastischen Elemente 28 sind derart ausgelegt, dass ein Radialversatz Vr, ein Winkelversatz W (Verkippung) und ein Axialversatz Va in einem gewissen Rahmen möglich sind, ohne dass die verschiedenen Bauteile verkanten, blockieren oder in sonstiger Weise die Funktion beeinflusst wird. Um dies zu gewährleisten ist unter anderem ein radialer Abstand d zwischen Antriebselement 26 und Abtriebselement 28 vorgesehen (Spielzwischenraum), der bei gleichen bzw. koaxialen Rotationsachsen A1 und A2 mindestens so groß ist, wie der maximal mögliche Achsversatz der Rotationsachsen A1 und A2. Es sind weitere Spielzwischenräume eingehalten, um einen Kontakt zwischen Antriebselement 26 und Abtriebselement 30 bei Axialversatz, Radialversatz und Verkippung zu vermeiden. Um ein Blockieren der Enden der elastischen Elemente 28 zwischen Antriebselement 26 und Abtriebselement 30 in radialer Richtung bei radialem Achsversatz zu verhindern, sind die Federführungen 38 nur mittig der elastischen Elemente 28 ausgeführt. Es kann jedoch von Vorteil und auch notwendig sein, dass sich die Bauteile der Achsversatzvorrichtung 18 in gewissen Betriebszuständen berühren, oder als Anschlag dienen.

Das Antriebselement 26 weist außerdem ein Anschlagelement 40 auf, welches das Abtriebselement 30 an einer Anschlagöffnung 42 radial durchgreift und an Anschlagbereichen 44 des Abtriebselements 30 in Umfangsrichtung Kontakt aufnehmen kann. Das Anschlagelement 40 und der Anschlagbereich 44 sind derart ausgebildet, dass der Drehwinkel zwischen Antriebselement 26 und Abtriebselement 30 begrenzt sind. Eine funktionale Drehwinkelbegrenzung ist allerdings von den Anforderungen abhängig und daher optional.

### Bezugszeichen

- 2: Antriebsmotor / Verbrennungsmotor
- 3: Kurbelwelle
- 6: Schaltgetriebe
- 7: Getriebeeingangswelle
- 10: Baueinheit
- 12: Elektrische Maschine
- 14: Stator
- 16: Rotor
- 17: Rotorträger
- 18: Achsversatzvorrichtung
- 20: Ausgangselement
- 22: Eingangswelle
- 23: Lagerung
- 24: Kupplungsvorrichtung
- 26: Antriebselement
- 28: Elastisches Element / Schraubenfeder
- 30: Abtriebselement
- 32: Aussparung
- 34: Aufnahme/n
- 36 a - c: Anlagebereiche / Anlageflächen
- 38: Führung / Federführung
- 40: Anschlagelement
- 42: Anschlagöffnung
- 44: Anschlagbereich
- A1: Rotationsachse
- A2: Rotationsachse
- d: Abstand / Spielzwischenraum
- Va: Axialversatz
- Vr: Radialversatz
- W: Winkel / Verkippung

## Patentansprüche

1. Baueinheit (10) umfassend,
- eine elektrischen Maschine (12) mit einem Stator (14) und einem drehbaren Rotor (16),
- ein drehbares Ausgangselement (20), welches zur Übertragung eines Drehmoments mit dem Rotor (16) in Wirkverbindung steht, und
- eine Achsversatzvorrichtung (18),
wobei die Achsversatzvorrichtung (18) zwischen dem Rotor (16) und dem Ausgangselement (20) angeordnet ist und die Übertragung eines Drehmoments bei einem Achsversatz und/oder einem Winkelversatz zwischen einer Rotationsachse (A1) des Rotors (16) und einer Rotationsachse (A2) des Ausgangselements (20) ermöglichtund wobei die Achsversatzvorrichtung (18) ein Antriebselement (26), ein Abtriebselement (30) und zumindest ein elastisches Element (28) aufweist, wobei das elastische Element (28) funktional zwischen dem Antriebselement (26) und dem Abtriebselement (30) angeordnet ist,
**dadurch gekennzeichnet, dass** das Antriebselement (26) und das Abtriebselement (30) Aussparungen (32) aufweisen, die jeweils paarweise eine Aufnahme (34) bilden, wobei das elastische Element (28) innerhalb einer Aufnahme (34) angeordnet ist.

2. Baueinheit (10) nach Anspruch 1, **dadurch gekennzeichnet, dass** das Ausgangselement (20) gegenüber dem Rotor (16) axial verlagerbar ist.

3. Baueinheit (10) nach Anspruch 1 oder 2, **dadurch gekennzeichnet, dass** zwischen dem Antriebselement (26) und dem Abtriebselement (30) Spielzwischenräume (d) in Radialrichtung und in Achsrichtung vorhanden sind, die ein einen Axialversatz, einen Radialversatz, sowie ein Verkippen des Antriebselements (26) und des Abtriebselements (30) zueinander zu ermöglichen.

4. Baueinheit (10) nach einem der Ansprüche 1 bis 3, **dadurch gekennzeichnet, dass** das Antriebselement (26) drehfest mit dem Rotor (16) und das Abtriebselement (30) drehfest mit dem Ausgangselement (20) verbunden ist.

5. Baueinheit (10) nach einem der Ansprüche 1 bis 4, **dadurch gekennzeichnet, dass** das Antriebselement (26) mit dem Rotor (16) in einem radial äußeren Bereich verbunden ist.

6. Baueinheit (10) nach einem der Ansprüche 1 bis 5, **dadurch gekennzeichnet, dass** das Antriebselement (26), das Abtriebselement (30) und das elastische Element (28) radial zueinander angeordnet sind.

7. Baueinheit (10) nach einem der Ansprüche 1 bis 6, **dadurch gekennzeichnet, dass** das Antriebselement (26) durch einen Rotorträger (17) des Rotors (16) und / oder das Abtriebselement (30) durch das Ausgangselement (20) ausgebildet ist.

8. Baueinheit (10) nach einem der Ansprüche 1 bis 7, **dadurch gekennzeichnet, dass** ein Drehwinkel zwischen dem Rotor (16) und dem Ausgangselement (30) durch einen Anschlag (40) begrenzt ist.

9. Baueinheit (10) nach einem der Ansprüche 1 bis 8, **dadurch gekennzeichnet, dass** die Achsversatzvorrichtung (18) mindestens drei elastische Elemente (28) aufweist, die gleichmäßig in Umfangsrichtung verteilt angeordnet sind.

10. Baueinheit (10) nach einem der Ansprüche 1 bis 9, **dadurch gekennzeichnet, dass** das/die elastische/n Element/e (28) als Schraubenfeder/n (28) ausgeführt ist/sind.

11. Baueinheit (10) nach einem der Ansprüche 1 bis 10, **dadurch gekennzeichnet, dass** zumindest das/die elastische/n Element/e (28), sowie das Antriebselement (26) und das Abtriebselement (30) als Stahlwerkstoffteile ausgebildet sind.

12. Baueinheit (10) nach einem der Ansprüche 1 bis 11, **dadurch gekennzeichnet, dass** zumindest das/die elastische/n Element/e (28), sowie Kontaktbereiche des Antriebselements (26) und des Abtriebselements (30), an denen ein elastisches Element (28) anliegt oder zur Anlage kommen kann, gehärtet sind.

13. Baueinheit (10) nach einem der Ansprüche 1 bis 12, **dadurch gekennzeichnet, dass** die Baueinheit (10) an einem Antriebsmotor (2) mit Kurbelwelle (3) anordbar ist, wobei der Rotor (16) mit der Kurbelwelle (30) wirkverbindbar ist.

14. Baueinheit (10) nach Anspruch 13, **dadurch gekennzeichnet, dass** die Baueinheit (10) eine Kupplungsvorrichtung (24) zur wahlweisen Unterbrechung der Drehmomentübertragung zwischen der Kurbelwelle (3) und dem Rotor (16) aufweist.

15. Baueinheit (10) nach einem der Ansprüche 1 bis 14, **dadurch gekennzeichnet, dass** die Baueinheit (10) mit elektrischer Maschine (12), Ausgangselement (20) und Achsversatzvorrichtung (18) als ein vorgefertigtes Einbaumodul ausgebildet ist.

## Claims

1. Assembly (10) comprising
- an electric machine (12) having a stator (14) and a rotatable rotor (16),
- a rotatable output element (20), which is operatively connected to the rotor (16) in order to transmit a torque, and
- an axial offset device (18),
the axial offset device (18) being arranged between the rotor (16) and the output element (20), and the transmission of a torque being made possible in the event of an axial offset and/or an angular offset between an axis of rotation (A1) of the rotor (16) and an axis of rotation (A2) of the output element (20), the axial offset device (18) having a drive element (26), an output drive element (30) and at least one resilient element (28), the resilient element (28) being arranged functionally between the drive element (26) and the output drive element (30),
**characterized in that** the drive element (26) and the output drive element (30) have cut-outs (32) which in each case in pairs form a receptacle (34), wherein the resilient element (28) is arranged within a receptacle (34).

2. Assembly (10) according to Claim 1, **characterized in that** the output element (20) is axially displaceable with respect to the rotor (16).

3. Assembly (10) according to Claim 1 or 2, **characterized in that** between the drive element (26) and the output drive element (30) there are clearance interspaces (d) in the radial direction and in the axial direction, which permit an axial offset, a radial offset and tilting of the drive element (26) and of the output drive element (30) relative to each other.

4. Assembly (10) according to one of Claims 1 to 3, **characterized in that** the drive element (26) is co- rotationally connected to the rotor (16), and the output drive element (30) is co-rotationally connected to the output element (20).

5. Assembly (10) according to one of Claims 1 to 4, **characterized in that** the drive element (26) is connected to the rotor (16) in a radially outer region.

6. Assembly (10) according to one of Claims 1 to 5, **characterized in that** the drive element (26), the output drive element (30) and the resilient element (28) are arranged radially relative to one another.

7. Assembly (10) according to one of Claims 1 to 6, **characterized in that** the drive element (26) is formed by a rotor carrier (17) of the rotor (16) and/or the output drive element (30) is formed by the output element (20).

8. Assembly (10) according to one of Claims 1 to 7 **characterized in that** an angle of rotation between the rotor (16) and the output drive element (30) is limited by a stop (40) .

9. Assembly (10) according to one of Claims 1 to 8 **characterized in that** the axial offset device (18) has at least three resilient elements (28), which are arranged distributed uniformly in the circumferential direction.

10. Assembly (10) according to one of Claims 1 to 9, **characterized in that** the resilient element/s (28) is/are implemented as (a) helical spring/s (28).

11. Assembly (10) according to one of Claims 1 to 10, **characterized in that** at least the resilient element/s (28) and the drive element (26) and the output drive element (30) are formed as steel parts.

12. Assembly (10) according to one of Claims 1 to 11, **characterized in that** at least the resilient element/s (28) and contact regions of the drive element (26) and of the output drive element (30) which a resilient element (28) bears on or can come into contact with are hardened.

13. Assembly (10) according to one of Claims 1 to 12, **characterized in that** the assembly (10) can be arranged on a drive motor (2) with crankshaft (3), wherein the rotor (16) can be connected operatively to the crankshaft (3).

14. Assembly (10) according to Claim 13, **characterized in that** the assembly (10) has a coupling device (24) for the optional interruption of the torque transmission between the crankshaft (3) and the rotor (16).

15. Assembly (10) according to one of Claims 1 to 14, **characterized in that** the assembly (10) with electric machine (12), output element (20) and axial offset device (18) is formed as a prefabricated installation module.

## Revendications

1. Unité modulaire (10) comprenant :
- une machine électrique (12) avec un stator (14) et un rotor rotatif (16),
- un élément de sortie rotatif (20) qui est en liaison fonctionnelle avec le rotor (16) pour transférer un couple, et
- un dispositif de décalage d'axe (18),
le dispositif de décalage d'axe (18) étant disposé entre le rotor (16) et l'élément de sortie (20) et permettant le transfert d'un couple dans le cas d'un décalage d'axe et/ou d'un décalage angulaire entre un axe de rotation (A1) du rotor (16) et un axe de rotation (A2) de l'élément de sortie (20) et le dispositif de décalage d'axe (18) présentant un élément d'entraînement (26), un élément de prise de force (30) et au moins un élément élastique (28), l'élément élastique (28) étant disposé fonctionnellement entre l'élément d'entraînement (26) et l'élément de prise de force (30),
**caractérisée en ce que** l'élément d'entraînement (26) et l'élément de prise de force (30) présentent des évidements (32) qui forment à chaque fois, par paires, un logement (34), l'élément élastique (28) étant disposé à l'intérieur d'un logement (34).

2. Unité modulaire (10) selon la revendication 1, **caractérisée en ce que** l'élément de sortie (20) peut être déplacé axialement par rapport au rotor (16) .

3. Unité modulaire (10) selon la revendication 1 ou 2, **caractérisée en ce qu'**entre l'élément d'entraînement (26) et l'élément de prise de force (30) sont prévus des espaces intermédiaires de jeu (d) dans la direction radiale et dans la direction axiale, lesquels permettent un décalage axial, un décalage radial ainsi qu'un basculement de l'élément d'entraînement (26) et de l'élément de prise de force (30) l'un par rapport à l'autre.

4. Unité modulaire (10) selon l'une quelconque des revendications 1 à 3, **caractérisée en ce que** l'élément d'entraînement (26) est connecté de manière solidaire en rotation au rotor (16) et l'élément de prise de force (30) est connecté de manière solidaire en rotation à l'élément de sortie (20).

5. Unité modulaire (10) selon l'une quelconque des revendications 1 à 4, **caractérisée en ce que** l'élément d'entraînement (26) est connecté au rotor (16) dans une région radialement extérieure.

6. Unité modulaire (10) selon l'une quelconque des revendications 1 à 5, **caractérisée en ce que** l'élément d'entraînement (26), l'élément de prise de force (30) et l'élément élastique (28) sont disposés radialement les uns par rapport aux autres.

7. Unité modulaire (10) selon l'une quelconque des revendications 1 à 6, **caractérisée en ce que** l'élément d'entraînement (26) est réalisé par un support de rotor (17) du rotor (16) et/ou l'élément de prise de force (30) est réalisé par l'élément de sortie (20).

8. Unité modulaire (10) selon l'une quelconque des revendications 1 à 7, **caractérisée en ce qu'**un angle de rotation entre le rotor (16) et l'élément de prise de force (30) est limité par une butée (40) .

9. Unité modulaire (10) selon l'une quelconque des revendications 1 à 8, **caractérisée en ce que** le dispositif de décalage d'axe (18) présente au moins trois éléments élastiques (28) qui sont disposés de manière répartie uniformément dans la direction périphérique.

10. Unité modulaire (10) selon l'une quelconque des revendications 1 à 9, **caractérisée en ce que** le ou les éléments élastiques (28) est/sont réalisé(s) sous forme de ressort (s) hélicoïda(l) (ux) (28).

11. Unité modulaire (10) selon l'une quelconque des revendications 1 à 10, **caractérisée en ce qu'**au moins le ou les élément(s) élastique(s) (28) ainsi que l'élément d'entraînement (26) et l'élément de prise de force (30) sont réalisés sous forme de pièces en matériau à base d'acier.

12. Unité modulaire (10) selon l'une quelconque des revendications 1 à 11, **caractérisée en ce qu'**au moins le ou les élément(s) élastique(s) (28) ainsi que des régions de contact de l'élément d'entraînement (26) et de l'élément de prise de force (30), au niveau desquelles un élément élastique (28) s'applique ou peut venir en appui, sont durcies.

13. Unité modulaire (10) selon l'une quelconque des revendications 1 à 12, **caractérisée en ce que** l'unité modulaire (10) peut être disposée au niveau d'un moteur d'entraînement (2) avec un vilebrequin (3), le rotor (16) pouvant être connecté fonctionnellement au vilebrequin (3).

14. Unité modulaire (10) selon la revendication 13, **caractérisée en ce que** l'unité modulaire (10) présente un dispositif d'embrayage (24) pour interrompre de manière sélective le transfert de couple entre le vilebrequin (3) et le rotor (16).

15. Unité modulaire (10) selon l'une quelconque des revendications 1 à 14, **caractérisée en ce que** l'unité modulaire (10) est réalisée sous forme de module d'installation préfabriqué avec la machine électrique (12), l'élément de sortie (20) et le dispositif de décalage d'axe (18).
